# EUROPEAN PATENT SPECIFICATION

(11) **EP 4 527 578 B1**
(45) Date of publication and mention of the grant of the patent: **13.05.2026**
(21) Application number: 24198916.9
(22) Date of filing: 06.09.2024
(51) Int. Cl.: B27B 31/00, B27B 31/08, B65G 41/00, B65G 21/14

(54) **FIREWOOD CONVEYOR FOR A CUTTING MACHINE AND/OR SPLITTING MACHINE AND A CUTTING MACHINE AND/OR SPLITTING MACHINE PROVIDED WITH SUCH A CONVEYOR**
BRENNHOLZFÖRDERER FÜR EINE SCHNEID- UND/ODER SPALTMASCHINE SOWIE EINE MIT EINEM SOLCHEN FÖRDERER VERSEHENE SCHNEID- UND/ODER SPALTMASCHINE
TRANSPORTEUR DE BOIS DE CHAUFFAGE POUR UNE COUPEUSE ET/OU UNE FONDEUSE ET UNE COUPEUSE ET/OU UNE FENDEUSE ÉQUIPÉE D'UN TEL TRANSPORTEUR

(30) Priority: 22.09.2023 SI 202300128
(43) Date of publication of application: 26.03.2025
(73) Proprietor: Uniforest, D.o.o., 3312 Prebold (SI)
(72) Inventor: GROBELNIK, Sandi, 3312 Prebold (SI)
(74) Representative: Sveticic, Andrej

(56) References cited:
- EP-A1- 3 556 500
- EP-B1- 1 888 435
- EP-B1- 1 899 244
- CN-A- 110 775 534
- US-A1- 2013 098 503

## Description

### Field of invention

The invention relates to a firewood conveyor for a cutting and/or splitting machine and to a cutting and/or splitting machine provided with such a conveyor.

### Prior art

A firewood conveyor for a cutting and/or splitting machine is known from prior art, which, when is use, is pivotally hinged to a cutting and/or splitting machine and configured to convey firewood from the machine to a higher level, from which it drops under the influence of gravity into a collector, for instance. To achieve an adequate height level to which the firewood needs to be conveyed, the conveyor must have an appropriate length. However, such a length of a conveyor is an obstacle when the machine needs to be transported to another location. This is why known conveyors are formed of telescopic sections which slide inside each other. When a machine needs to be transported to another location, the firewood conveyor is first swivelled to a vertical position and then telescopically folded. The conveyor belt is no longer taut but falls loosely partly into the area between the conveyor and the machine on one side and partly on the ground on the other side. The conveyor belt must be manually pulled into the area between the conveyor and the machine and fastened, e.g. with a chain or an elastic strap, to prevent the conveyor belt from falling to the ground during the machine transport and getting damaged.

A firewood conveyor according to the preamble of claim 1 is known from EP 1 899 244 B1.

### Technical problem

The technical problem is how to provide a firewood conveyor for a cutting and/or splitting machine, which, when used, will facilitate the process of preparing the firewood conveyor for the transport of the machine and ensure a safe transport of the machine without the risk of the conveyor belt getting damaged during transport.

### Solution to the technical problem

The relative terms such as vertical position, lower, upper, lateral etc. are defined with respect to the orientation of the conveyor in space when it is used for transporting firewood when the conveyor is attached to a cutting and/or splitting machine. The relative terms such as distal and proximal are defined with respect to the machine, to which the conveyor is attached when in use.

The technical problem is solved by a firewood conveyor for a cutting and/or splitting machine, comprising:
- a conveyor frame comprising, in the firewood conveying direction, at least two frame sections, i.e. at least a first and a last section, which can telescopically slide into each other, the first section being adapted in a way to be attachable in a swivelling manner via a hinge to the cutting and/or splitting machine,
- two cylinders rotationally arranged at the opposite ends of the frame, at least one cylinder being provided with a drive for driving a conveyor belt,
- an endless conveyor belt arranged over said cylinders,
- a means for changing the tilt of the conveyor,
- a hydraulic cylinder connected with one of its ends to the first frame section and connected with the other of its ends to the last frame section, the hydraulic cylinder in its extended configuration holding the frame in the extended position, and
- at least one lock means arranged on a distal lateral portion of the first conveyor frame section, preferably two lock means arranged on opposite distal lateral portions of the first conveyor frame section, the lock means being adapted to assume a first position, in which it is not in contact with the conveyor belt, and a second position, in which the conveyor belt on the bottom side is squeezed between the first conveyor frame section and the lock means.

An advantage of the firewood conveyor of the invention over known solutions is that the conveyor belt, when the firewood transporter is transferred to a machine transport position, automatically folds in the area between the conveyor and the cutting and/or splitting machine, which facilitates the process and is time-saving. In addition, unwinding of the belt from the conveyor is prevented during transport, which ensures a safe transport without any risks of the belt getting damaged.

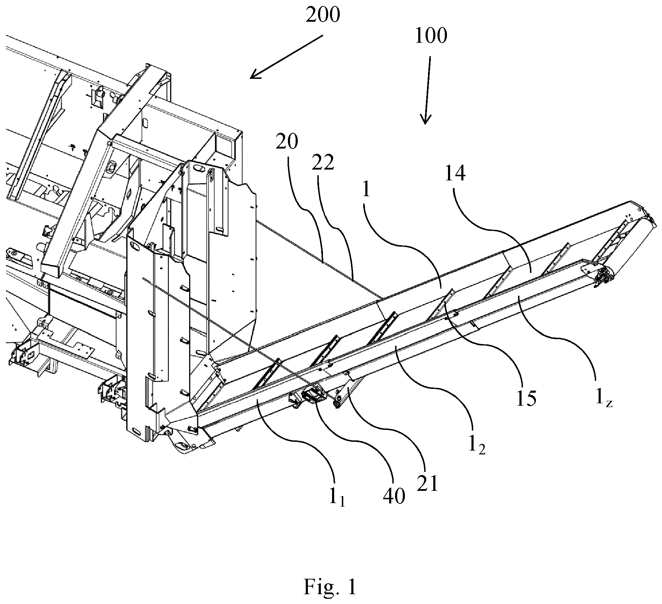

Figure 1: Conveyor arranged on a cutting and splitting machine in the position of use for conveying firewood (the conveyor belt in the area of the cylinder is not shown)

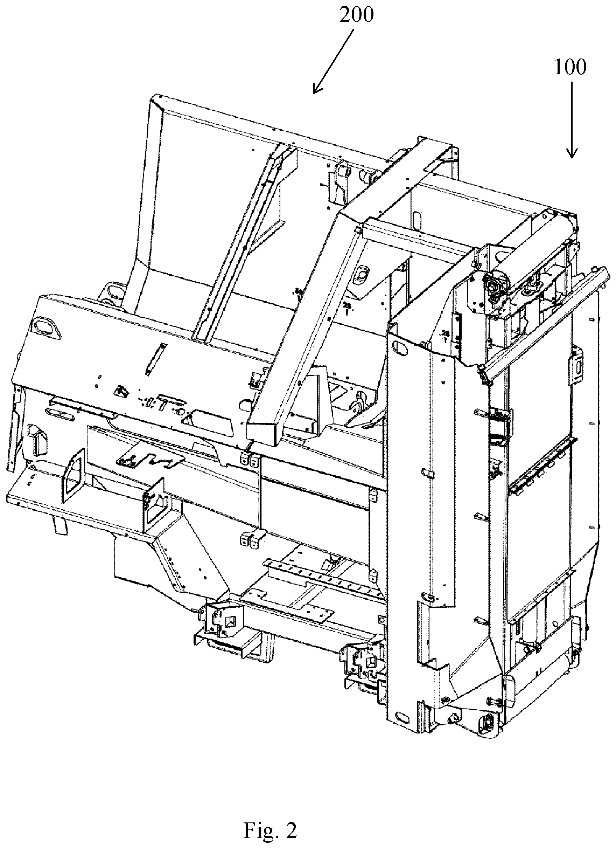

Figure 2: Conveyor arranged on a cutting and splitting machine in the machine transport position (the conveyor belt in the area of the cylinder is not shown)

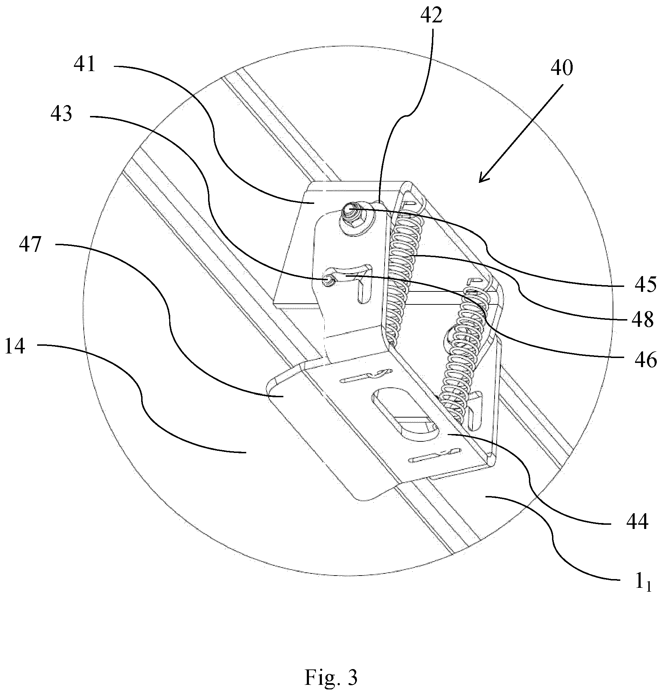

Figure 3: Lock means of U profiles in a first position

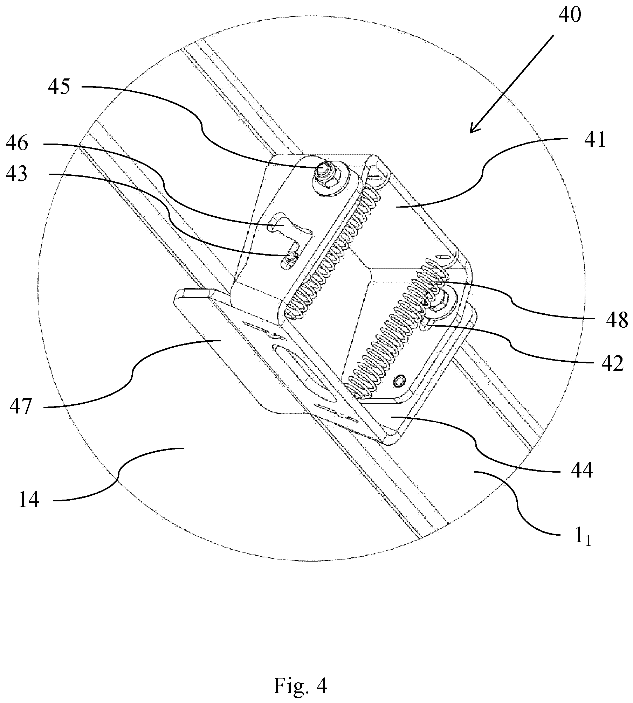

Figure 4: Lock means of U profiles in a second position

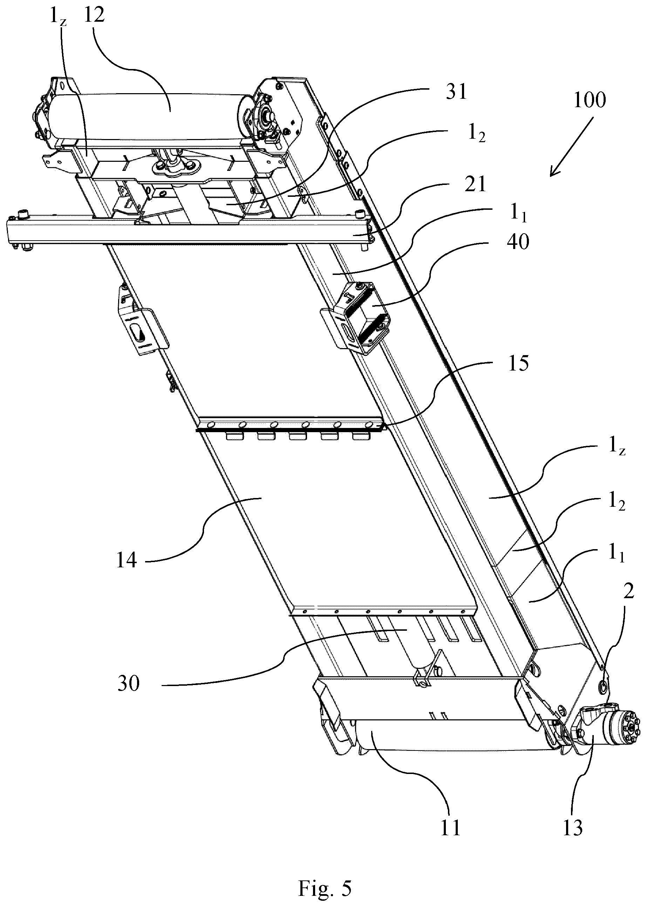

Figure 5: Conveyor (the conveyor belt in the area of the cylinder is not shown)

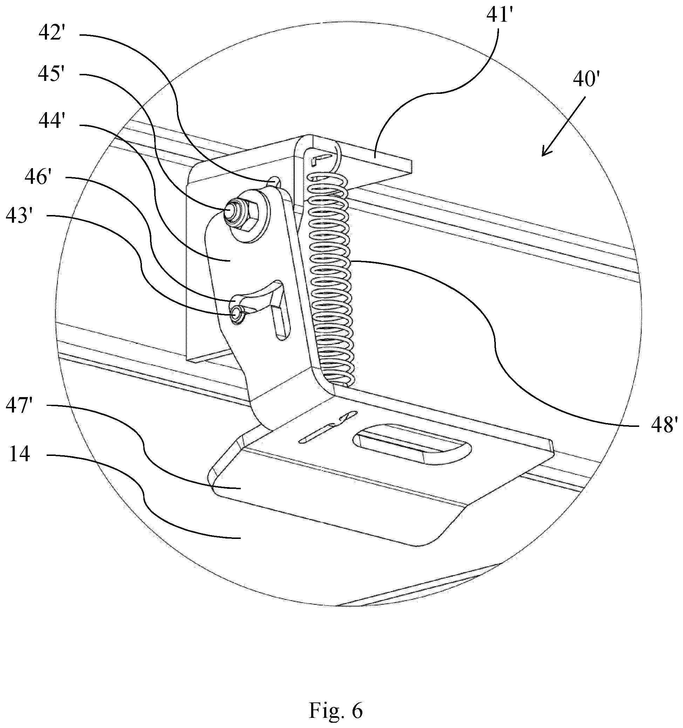

Figure 6: Lock means of L profiles in a first position

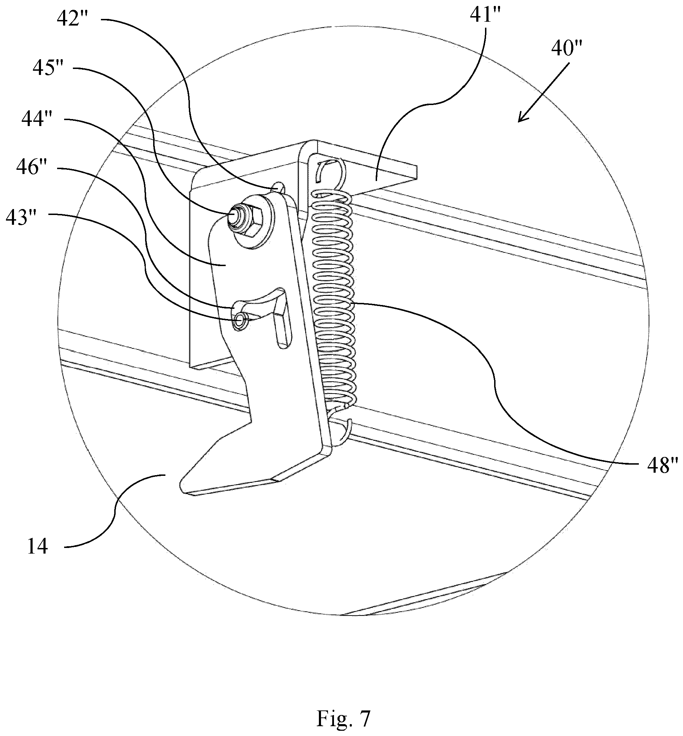

Figure 7: Lock means with a first swivel lever in a first position

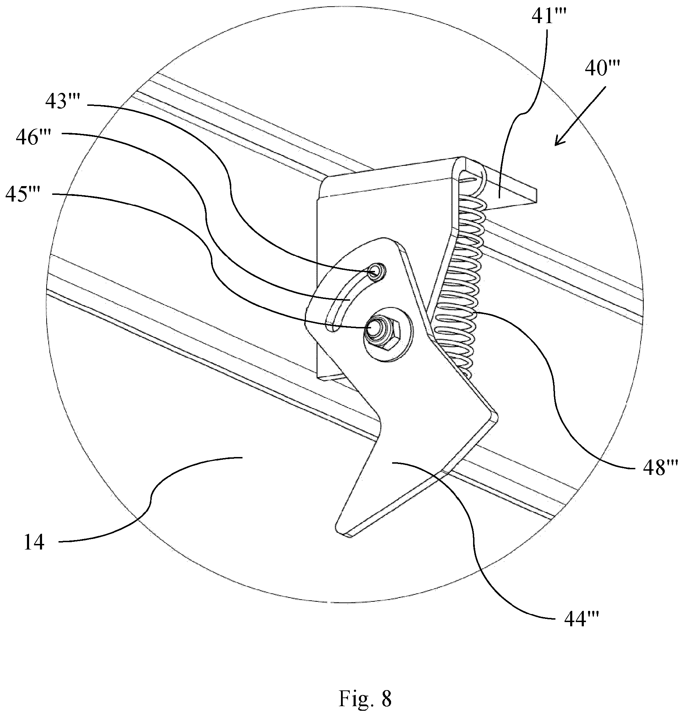

Figure 8: Lock means with a second swivel lever in a first position

The invention is described in more detail hereinbelow.

The technical problem is solved by a firewood conveyor 100 for a cutting and/or splitting machine 200, comprising:
- a conveyor frame 1 comprising, in the firewood conveying direction, at least two frame sections 1₁, 1₂, 1_{z}, i.e. at least a first 1₁ and a last 1_{z} section, which can telescopically slide into each other, the first section being adapted in a way to be attachable in a swivelling manner via a hinge 2 to the cutting machine and/or splitting machine,
- two cylinders 11, 12 rotationally arranged at the opposite ends of the frame, at least one cylinder being provided with a drive 13 for driving a conveyor belt 14,
- an endless conveyor belt 14 arranged over said cylinders,
- a means 20 for changing the tilt of the conveyor,
- a hydraulic cylinder 30 connected with one of its ends to the first frame section 1₁ and connected with the other of its ends to the last frame section 1_{z}, the hydraulic cylinder in its extended configuration holding the frame in the extended position, and
- at least one lock means 40, 40', 40", 40‴ arranged on a distal lateral portion of the first conveyor frame section 1₁, preferably two lock means arranged on opposite distal lateral portions of the first conveyor frame section, the lock means being adapted to assume a first position, in which it is not in contact with the conveyor belt 14, and a second position, in which the conveyor belt 14 on the bottom side is squeezed between the first conveyor frame section 1₁ and the lock means 40, 40', 40", 40"'.

When the cutting and/or splitting machine is to be prepared for transport, the means for changing the tilt of the conveyor is actuated to shift the conveyor to the vertical position, at least one lock means is shifted to the second position. The hydraulic cylinder is then actuated to fold the conveyor telescopically. Since the conveyor belt is locked at the distal side by at least one lock means, it automatically folds in the area between the cutting and/or splitting machine and the conveyor under the influence of gravity. When the cutting and/or splitting machine is transported, at least one lock means remains in the second position, preventing the conveyor belt from unwinding from the conveyor, falling to ground and getting damaged.

The hydraulic cylinder may be a single acting cylinder. In this case, the conveyor in the vertical position is telescopically folded when the cylinder is actuated under the influence of gravity. Alternatively, the hydraulic cylinder may be a double acting cylinder. In this case, the conveyor in the vertical position is telescopically folded when the cylinder is actuated in a controlled manner. Irrespective of the type, the hydraulic cylinder may be configured as a telescopic hydraulic cylinder. It is reasonable to use a telescopic hydraulic cylinder when the number of the telescopic frame sections exceeds two. The hydraulic cylinder may optionally be supported on the conveyor frame by a sliding support 31, e.g. of a plastic material, to prevent the slack of the hydraulic cylinder.

The lock means 40 may be configured in a way to comprise
a first U profile 41 arranged at the distal lateral portion of the first conveyor frame section 1₁ and provided on its legs with two axially symmetrically formed oblong through holes 42 and two cylindrical pins 43 projecting in opposite directions,
a second U profile 44 attached by two screws 45 to the first profile to swivel with respect to the first profile and move within the oblong through holes 42 in the first profile and provided on its legs by two axially symmetrically formed J shaped through holes 46 engaging said two cylindrical pins 43, and a projecting portion 47 arranged in a way to press against the conveyor belt 14 in the second position of the lock means,
at least one spring 48, preferably two springs, arranged in a way to bias the first 41 and the second profile 44 towards each other.

When the lock means 40 is in the first position, the user pulls the second profile 44 away from the first profile 41 such that the cylindrical pins 43 slide from the longer leg of the J shaped through hole 46, then in the direction away from the conveyor, and then the second profile is released, such that the cylindrical pins snap fit in the shorter leg of the J shaped through hole, thus achieving the second position of the lock means. The procedure is reversed when the lock means is to be shifted from the second position to the first one.

Alternatively, the lock means 40' may be configured in a way to comprise
a first L profile 41' arranged at the distal lateral portion of the first conveyor frame section 1₁ and provided on its leg with an oblong through hole 42' and a cylindrical pin 43' projecting outwards,
a second L profile 44' attached by a screw 45' to the first profile to swivel with respect to the first profile and move within the oblong through hole 42' in the first profile and provided on its leg by a J shaped through hole 46' engaging said cylindrical pin 43', and a projecting portion 47' arranged in a way to press against the conveyor belt 14 in the second position of the lock means,
at least one spring 48' arranged in a way to bias the first 41' and the second profile 44' towards each other.

According to a third embodiment, the lock means may be configured in a way to comprise
a third L profile 41" arranged at the distal lateral portion of the first conveyor frame section 1₁ and provided on its leg with an oblong through hole 42" and a cylindrical pin 43" projecting outwards,
a first swivel lever 44" attached by a screw 45" to the third profile to swivel with respect to the third profile and move within the oblong through hole 42" in the third profile and provided on its leg by a J shaped through hole 46" engaging said cylindrical pin 43", the first swivel lever 44" being arranged in a way to press against the conveyor belt 14 in the second position of the lock means,
at least one spring 48" arranged in a way to bias the third profile 41" and the first swivel lever 44" towards each other.

According to a fourth embodiment, the lock means may be configured in a way to comprise
a fourth L profile 41‴ arranged at the distal lateral portion of the first conveyor frame section 1₁ and provided on its leg with a cylindrical pin 43‴ projecting outwards,
a second swivel lever 44‴ attached by a screw 45‴ to the fourth profile to swivel with respect to the fourth profile about the axis of said screw and provided on its leg by an arc shaped through hole 46‴ engaging said cylindrical pin 43‴, the second swivel lever 44‴ being arranged in a way to press against the conveyor belt 14 in the second position of the lock means,
at least one spring 48‴ arranged in a way to bias the fourth profile 41‴ and the second swivel lever 44‴ towards each other and in a way that the axis of the spring intersects the axis of the screw when the second swivel lever 44‴ is arranged in the middle between the first and second positions of the lock means.

However, as has been shown during the testing of the conveyor, this design of the lock means ensures that even if the user forgets to switch the lock means from the second to the first position, the operation of the conveyor is not affected, as the conveyor is automatically released from the lock means when the conveyor belt is started, which is an additional advantage. The lock means therefore does not obstruct the operation of the conveyor belt in any position.

The means 20 for changing the tilt of the conveyor may be configured in a way to comprise:
a winding drum with a drive attachable to a cutting and/or splitting machine,
a support 21 fixed to the bottom side of the conveyor frame and provided at one end with a first and second sheaves and at the other end with a third and fourth sheaves,
a fifth sheave attachable to a cutting and/or splitting machine,
a cable 22 attachable with one of its ends to a cutting and/or splitting machine and guided through a first sheave, a third sheave, a fifth sheave, a fourth sheave and a second sheave and connected with the other of its ends to the winding drum.

The means for changing the tilt of the conveyor may be configured in a way to comprise:
a winding drum with a drive attachable to a cutting and/or splitting machine,
a support fixed to the bottom side of the conveyor frame and provided with a sheave at a respective end,
a cable attachable with one of its ends to a cutting and/or splitting machine and guided through said sheaves and connected with the other of its ends to the winding drum.

The means for changing the tilt of the conveyor may be configured in a way to comprise:
a winding drum with a drive attachable to a cutting and/or splitting machine,
a cable connected with one of its ends to the conveyor and with the other of its ends to the winding drum.

The conveyor belt may be provided with retaining rails 15 that prevent the firewood on the conveyor belt from slipping while conveyed.

The invention further relates to a cutting and/or a splitting machine comprising said conveyor.

## Claims

1. Firewood conveyor (100) for a cutting and/or splitting machine (200), comprising:
- a conveyor frame (1) comprising, in the firewood conveying direction, at least two frame sections (1₁, 1₂, 1_{z}) i.e. at least a first (1₁) and a last (1_{z}) section, which can telescopically slide into each other, the first section being adapted in a way to be attachable in a swivelling manner via a hinge (2) to the cutting machine and/or splitting machine,
- two cylinders (11, 12) rotationally arranged at the opposite ends of the frame, at least one cylinder being provided with a drive (13) for driving a conveyor belt (14),
- an endless conveyor belt (14) arranged over said cylinders,
- a means (20) for changing the tilt of the conveyor,
- a hydraulic cylinder (30) connected with one of its ends to the first frame section (1₁) and connected with the other of its ends to the last frame section (1_{z}), the hydraulic cylinder in its extended configuration holding the frame in the extended position, **characterized by** further comprising
- at least one lock means (40, 40', 40", 40"') arranged on a distal lateral portion of the first conveyor frame section (1₁), preferably two lock means arranged on opposite distal lateral portions of the first conveyor frame section, the lock means being adapted to assume a first position, in which it is not in contact with the conveyor belt (14), and a second position, in which the conveyor belt (14) on the bottom side is squeezed between the first conveyor frame section (1₁) and the lock means (40, 40', 40", 40"').

2. Conveyor according to claim 1, **characterized in that** the lock means (40) is configured to comprise:
- a first U profile (41) arranged at the distal lateral portion of the first conveyor frame section (1₁) and provided on its legs with two symmetrically formed oblong through holes (42) and two cylindrical pins (43) facing opposite directions,
- a second U profile (44) attached by two screws (45) to the first profile to swivel with respect to the first profile and move within the oblong through holes (42) in the first profile and provided on its legs by two symmetrically formed J shaped through holes (46) engaging said two cylindrical pins (43), and a projecting portion (47) arranged in a way to press against the conveyor belt (14) in the second position of the lock means, and
- at least one spring (48), preferably two springs, arranged in a way to bias the first (41) and the second profile (44) towards each other.

3. Conveyor according to claim 1, **characterized in that** the lock means (40) is configured to comprise:
- a first L profile (41') arranged at the distal lateral portion of the first conveyor frame section (1₁) and provided on its leg with an oblong through hole (42') and a cylindrical pin (43') projecting outwards,
- a second L profile (44') attached by a screw (45') to the first profile to swivel with respect to the first profile and move within the oblong through hole (42') in the first profile and provided on its leg by a J shaped through hole (46') engaging said cylindrical pin (43'), and a projecting portion (47') arranged in a way to press against the conveyor belt (14) in the second position of the lock means,
- at least one spring (48') arranged in a way to bias the first (41') and the second profile (44') towards each other.

4. Conveyor according to claim 1, **characterized in that** the lock means (40") is configured to comprise:
- a third L profile (41") arranged at the distal lateral portion of the first conveyor frame section (1₁) and provided on its leg with an oblong through hole (42") and a cylindrical pin (43") projecting outwards,
- a first swivel lever (44") attached by a screw (45") to the third profile to swivel with respect to the third profile and move within the oblong through hole (42") in the third profile and provided on its leg by a J shaped through hole (46") engaging said cylindrical pin (43"), the first swivel lever (44") being arranged in a way to press against the conveyor belt (14) in the second position of the lock means,
- at least one spring (48") arranged in a way to bias the third profile (41") and the first swivel lever (44") towards each other.

5. Conveyor according to claim 1, **characterized in that** the lock means (40‴) is configured to comprise:
- a fourth L profile (41‴') arranged at the distal lateral portion of the first conveyor frame section (1₁) and provided on its leg with a cylindrical pin (43‴) projecting outwards,
- a second swivel lever (44‴) attached by a screw (45‴) to the fourth profile to swivel with respect to the fourth profile about the axis of said screw and provided on its leg by an arc shaped through hole (46‴) engaging said cylindrical pin (43‴), the second swivel lever (44‴) being arranged in a way to press against the conveyor belt (14) in the second position of the lock means,
- at least one spring (48‴) arranged in a way to bias the fourth profile (41‴) and the second swivel lever (44ʺʺ) towards each other and in a way that the axis of the spring intersects the axis of the screw when the second swivel lever (44"') is arranged in the middle between the first and second positions of the lock means.

6. Conveyor according to any of the preceding claims, **characterized in that** the hydraulic cylinder is supported on the conveyor frame by a sliding support (31), e.g. of a plastic material.

7. Conveyor according to any of the preceding claims, **characterized in that** a means (20) for changing the tilt of the conveyor is configured to comprise:
- a winding drum with a drive attachable to a cutting and/or splitting machine,
- a support (21) fixed to the bottom side of the conveyor frame and provided at one end with a first and second sheaves and at the other end with a third and fourth sheaves,
- a fifth sheave attachable to a cutting and/or splitting machine,
- a cable (22) attachable with one of its ends to a cutting and/or splitting machine and guided through a first sheave, a third sheave, a fifth sheave, a fourth sheave and a second sheave and connected with the other of its ends to the winding drum.

8. Conveyor according to any of the preceding claims, **characterized in that** the conveyor belt (14) is provided with retaining rails (15).

9. A cutting and/or splitting machine comprising the conveyor according to any of the preceding claims.

## Patentansprüche

1. Brennholzförderer (100) für eine Schneid- und/oder Spaltmaschine (200), umfassend:
- einen Förderrahmen (1), der in der Brennholzförderrichtung mindestens zwei Rahmenabschnitte (1₁, 1₂, 1_{z}), d. h. mindestens einen ersten (1ₗ) und einen letzten (1_{z}) Abschnitt, umfasst, die teleskopartig ineinander gleiten können, wobei der erste Abschnitt derart ausgelegt ist, dass er auf schwenkbare Weise über ein Scharnier (2) an der Schneidmaschine und/oder Spaltmaschine anbringbar ist,
- zwei Zylinder (11, 12), die an den gegenüberliegenden Enden des Rahmens drehbar angeordnet sind, wobei mindestens ein Zylinder mit einem Antrieb (13) zum Antreiben eines Förderbandes (14) versehen ist,
- ein Endlosförderband (14), das über den Zylindern angeordnet ist,
- ein Mittel (20) zum Ändern der Neigung des Förderers,
- einen Hydraulikzylinder (30), der mit einem seiner Enden mit dem ersten Rahmenabschnitt (1ₗ) und mit dem anderen seiner Enden mit dem letzten Rahmenabschnitt (1_{z}) verbunden ist, wobei der Hydraulikzylinder in seiner ausgefahrenen Konfiguration den Rahmen in der ausgefahrenen Position hält, **dadurch gekennzeichnet, dass** er ferner Folgendes umfasst
- mindestens ein Verriegelungsmittel (40, 40', 40", 40‴), das an einem distalen seitlichen Teil des ersten Förderrahmenabschnitts (1ₗ) angeordnet ist, vorzugsweise zwei Verriegelungsmittel, die an gegenüberliegenden distalen seitlichen Teilen des ersten Förderrahmenabschnitts angeordnet sind, wobei das Verriegelungsmittel dazu ausgelegt ist, eine erste Position, in der es nicht mit dem Förderband (14) in Kontakt steht, und eine zweite Position, in der das Förderband (14) an der Unterseite zwischen dem ersten Förderrahmenabschnitt (1ₗ) und dem Verriegelungsmittel (40, 40', 40", 40‴) eingezwängt ist, einzunehmen.

2. Förderer nach Anspruch 1, **dadurch gekennzeichnet, dass** das Verriegelungsmittel (40) so konfiguriert ist, dass es Folgendes umfasst:
- ein erstes U-Profil (41), das am distalen seitlichen Teil des ersten Förderrahmenabschnitts (1ₗ) angeordnet ist und an seinen Schenkeln mit zwei symmetrisch ausgebildeten länglichen Durchgangslöchern (42) und zwei zylindrischen Stiften (43) versehen ist, die in entgegengesetzte Richtungen weisen,
- ein zweites U-Profil (44), das mit zwei Schrauben (45) so am ersten Profil angebracht ist, dass es in Bezug auf das erste Profil schwenkt und sich innerhalb der länglichen Durchgangslöcher (42) in dem ersten Profil bewegt, und an seinen Schenkeln mit zwei symmetrisch ausgebildeten J-förmigen Durchgangslöchern (46), die die zwei zylindrischen Stifte (43) in Eingriff nehmen, und einem vorstehenden Teil (47) bereitgestellt ist, der derart angeordnet ist, dass er in der zweiten Position des Verriegelungsmittels gegen das Förderband (14) drückt, und
- mindestens eine Feder (48), vorzugsweise zwei Federn, die derart angeordnet sind, dass sie das erste (41) und das zweite Profil (44) zueinander hin vorspannen.

3. Förderer nach Anspruch 1, **dadurch gekennzeichnet, dass** das Verriegelungsmittel (40) so konfiguriert ist, dass es Folgendes umfasst:
- ein erstes L-Profil (41'), das am distalen seitlichen Teil des ersten Förderrahmenabschnitts (1ₗ) angeordnet ist und an seinem Schenkel mit einem länglichen Durchgangsloch (42') und einem nach außen vorstehenden zylindrischen Stift (43') versehen ist,
- ein zweites L-Profil (44'), das mit einer Schraube (45') so am ersten Profil angebracht ist, dass es in Bezug auf das erste Profil schwenkt und sich innerhalb des länglichen Durchgangslochs (42') in dem ersten Profil bewegt, und an seinem Schenkel mit einem J-förmigen Durchgangsloch (46'), das den zylindrischen Stift (43') in Eingriff nimmt, und einem vorstehenden Teil (47') bereitgestellt ist, der derart angeordnet ist, dass er in der zweiten Position des Verriegelungsmittels gegen das Förderband (14) drückt,
- mindestens eine Feder (48'), die derart angeordnet ist, dass sie das erste (41') und das zweite Profil (44') zueinander hin vorspannt.

4. Förderer nach Anspruch 1, **dadurch gekennzeichnet, dass** das Verriegelungsmittel (40") so konfiguriert ist, dass es Folgendes umfasst:
- ein drittes L-Profil (41"), das am distalen seitlichen Teil des ersten Förderrahmenabschnitts (1ₗ) angeordnet ist und an seinem Schenkel mit einem länglichen Durchgangsloch (42") und einem nach außen vorstehenden zylindrischen Stift (43") versehen ist,
- einen ersten Schwenkhebel (44"), der mit einer Schraube (45") so am dritten Profil angebracht ist, dass er in Bezug auf das dritte Profil schwenkt und sich innerhalb des länglichen Durchgangslochs (42") in dem dritten Profil bewegt, und an seinem Schenkel mit einem J-förmigen Durchgangsloch (46") bereitgestellt ist, das den zylindrischen Stift (43") in Eingriff nimmt, wobei der erste Schwenkhebel (44") derart angeordnet ist, dass er in der zweiten Position des Verriegelungsmittels gegen das Förderband (14) drückt,
- mindestens eine Feder (48"), die derart angeordnet ist, dass sie das dritte Profil (41") und den ersten Schwenkhebel (44") zueinander hin vorspannt.

5. Förderer nach Anspruch 1, **dadurch gekennzeichnet, dass** das Verriegelungsmittel (40‴) so konfiguriert ist, dass es Folgendes umfasst:
- ein viertes L-Profil (41‴), das am distalen seitlichen Teil des ersten Förderrahmenabschnitts (1ₗ) angeordnet ist und an seinem Schenkel mit einem nach außen vorstehenden zylindrischen Stift (43‴) versehen ist,
- einen zweiten Schwenkhebel (44‴), der mit einer Schraube (45‴) so am vierten Profil angebracht ist, dass er in Bezug auf das vierte Profil um die Achse der Schraube schwenkt, und an seinem Schenkel mit einem bogenförmigen Durchgangsloch (46‴) bereitgestellt ist, das den zylindrischen Stift (43‴) in Eingriff nimmt, wobei der zweite Schwenkhebel (44‴) derart angeordnet ist, dass er in der zweiten Position des Verriegelungsmittels gegen das Förderband (14) drückt,
- mindestens eine Feder (48‴), die derart angeordnet ist, dass sie das vierte Profil (41‴) und den zweiten Schwenkhebel (44ʺʺ) zueinander hin vorspannt, und derart, dass die Achse der Feder die Achse der Schraube schneidet, wenn der zweite Schwenkhebel (44‴) in der Mitte zwischen der ersten und der zweiten Position des Verriegelungsmittels angeordnet ist.

6. Förderer nach einem der vorhergehenden Ansprüche, **dadurch gekennzeichnet, dass** der Hydraulikzylinder mit einer Gleitstütze (31), z. B. aus einem Kunststoffmaterial, am Förderrahmen gestützt ist.

7. Förderer nach einem der vorhergehenden Ansprüche, **dadurch gekennzeichnet, dass** ein Mittel (20) zum Ändern der Neigung des Förderers so konfiguriert ist, dass es Folgendes umfasst:
- eine Wickeltrommel mit einem Antrieb, der an einer Schneid- und/oder Spaltmaschine anbringbar ist,
- eine Stütze (21), die an der Unterseite des Förderrahmens fixiert ist und an einem Ende mit einer ersten und einer zweiten Riemenscheibe und am anderen Ende mit einer dritten und einer vierten Riemenscheibe versehen ist,
- eine fünfte Riemenscheibe, die an einer Schneid- und/oder Spaltmaschine anbringbar ist,
- einen Seilzug (22), der mit einem seiner Enden an einer Schneid- und/oder Spaltmaschine anbringbar und durch eine erste Riemenscheibe, eine dritte Riemenscheibe, eine fünfte Riemenscheibe, eine vierte Riemenscheibe und eine zweite Riemenscheibe geführt ist und mit dem anderen seiner Enden mit der Wickeltrommel verbunden ist.

8. Förderer nach einem der vorhergehenden Ansprüche, **dadurch gekennzeichnet, dass** das Förderband (14) mit Halteschienen (15) versehen ist.

9. Schneid- und/oder Spaltmaschine, die den Förderer nach einem der vorhergehenden Ansprüche umfasst.

## Revendications

1. Transporteur (100) de bois de chauffage pour une coupeuse et/ou fendeuse (200) comprenant :
- un cadre de transporteur (1) comprenant, dans la direction de transport de bois de chauffage, au moins deux sections de cadre (1₁, 1₂, 1_{z}), c'est-à-dire au moins une première (1ₗ) et une dernière (1_{z}) section, qui peuvent coulisser l'une dans l'autre de manière télescopique, la première section étant conçue de manière à pouvoir être fixée de manière pivotante par l'intermédiaire d'une charnière (2) à la coupeuse et/ou fendeuse,
- deux vérins (11, 12) disposés en rotation au niveau des extrémités opposées du cadre, au moins un vérin étant pourvu d'un entraînement (13) pour entraîner une courroie transporteuse (14),
- une courroie transporteuse (14) sans fin disposée sur lesdits vérins,
- un moyen (20) pour modifier l'inclinaison du transporteur,
- un vérin hydraulique (30) relié au niveau de l'une de ses extrémités à la première section de cadre (1ₗ) et relié au niveau de l'autre de ses extrémités à la dernière section de cadre (1_{z}), le vérin hydraulique dans sa configuration étendue maintenant le cadre dans la position étendue, **caractérisé en ce qu'**il comprend en outre
- au moins un moyen de verrouillage (40, 40', 40", 40‴) disposé sur une partie latérale distale de la première section de cadre de transporteur (1ₗ), de préférence deux moyens de verrouillage disposés sur des parties latérales distales opposées de la première section de cadre de transport, le moyen de verrouillage étant conçu pour prendre une première position, dans laquelle il n'est pas en contact avec la courroie transporteuse (14), et une seconde position, dans laquelle la courroie transporteuse (14) sur le côté inférieur est comprimée entre la première section de cadre de transporteur (1ₗ) et le moyen de verrouillage (40, 40', 40", 40‴).

2. Transporteur selon la revendication 1, **caractérisé en ce que** le moyen de verrouillage (40) est conçu pour comprendre :
- un premier profilé en U (41) disposé au niveau de la partie latérale distale de la première section de cadre de transporteur (1ₗ) et pourvu sur ses pieds de deux trous traversants oblongs ménagés symétriquement (42) et de deux broches cylindriques (43) faisant face à des directions opposées,
- un second profilé en U (44) fixé par deux vis (45) au premier profilé pour pivoter par rapport au premier profilé et se déplacer à l'intérieur des trous traversants oblongs (42) du premier profilé et pourvu sur ses pieds de deux trous traversants en forme de J (46) formés symétriquement venant en prise avec lesdites deux broches cylindriques (43), et une partie en saillie (47) disposée de sorte à appuyer contre la courroie transporteuse (14) dans la seconde position du moyen de verrouillage, et
- au moins un ressort (48), de préférence deux ressorts, disposé de manière à solliciter le premier (41) et le second profilé (44) l'un vers l'autre.

3. Transporteur selon la revendication 1, **caractérisé en ce que** le moyen de verrouillage (40) est conçu pour comprendre :
- un premier profilé en L (41') disposé au niveau de la partie latérale distale de la première section de cadre de transporteur (1ₗ) et pourvu sur son pied d'un trou traversant oblong (42') et d'une broche cylindrique (43') faisant saillie vers l'extérieur,
- un deuxième profilé en L (44') fixé par une vis (45') au premier profilé pour pivoter par rapport au premier profilé et se déplacer dans le trou traversant oblong (42') du premier profilé et pourvu sur son pied d'un trou traversant en forme de J (46') venant en prise avec ladite broche cylindrique (43'), et une partie saillante (47') disposée de sorte à appuyer contre la courroie transporteuse (14) dans la seconde position du moyen de verrouillage,
- au moins un ressort (48') disposé de manière à solliciter le premier (41') et le deuxième profilé (44') l'un vers l'autre.

4. Transporteur selon la revendication 1, **caractérisé en ce que** le moyen de verrouillage (40") est conçu pour comprendre :
- un troisième profilé en L (41") disposé au niveau de la partie latérale distale de la première section de cadre de transporteur (1ₗ) et pourvu sur son pied d'un trou traversant oblong (42") et d'une broche cylindrique (43") faisant saillie vers l'extérieur,
- un premier levier de pivotement (44") fixé par une vis (45") au troisième profilé pour pivoter par rapport au troisième profilé et se déplaçant dans le trou traversant oblong (42") du troisième profilé et pourvu sur son pied d'un trou traversant en forme de J (46") venant en prise avec ladite broche cylindrique (43''), le premier levier de pivotement (44") étant disposé de sorte à appuyer contre la courroie transporteuse (14) dans la seconde position du moyen de verrouillage,
- au moins un ressort (48") disposé de manière à solliciter le troisième profilé (41") et le premier levier de pivotement (44") l'un vers l'autre.

5. Transporteur selon la revendication 1, **caractérisé en ce que** le moyen de verrouillage (40‴) est conçu pour comprendre :
- un quatrième profilé en L (41‴) disposé au niveau de la partie latérale distale de la première section de cadre de transporteur (1ₗ) et pourvu sur son pied d'une broche cylindrique (43‴) faisant saillie vers l'extérieur,
- un second levier de pivotement (44‴) fixé par une vis (45‴) du quatrième profilé pour pivoter par rapport au quatrième profilé autour de l'axe de ladite vis et pourvu sur son pied d'un trou traversant (46‴) en forme d'arc venant en prise avec ladite broche cylindrique (43‴), le second levier de pivotement (44‴) étant conçu de sorte à appuyer contre la courroie transporteuse (14) dans la seconde position du moyen de verrouillage,
- au moins un ressort (48‴) disposé de manière à solliciter le quatrième profilé (41‴) et le second levier de pivotement (44ʺʺ) l'un vers l'autre et de manière que l'axe du ressort croise l'axe de la vis lorsque le second levier de pivotement (44‴) est disposé au milieu entre les première et seconde positions du moyen de verrouillage.

6. Transporteur selon l'une quelconque des revendications précédentes, **caractérisé en ce que** le vérin hydraulique est supporté sur le cadre de transporteur par un support coulissant (31), par exemple en matière plastique.

7. Transporteur selon l'une quelconque des revendications précédentes, **caractérisé en ce qu'**un moyen (20) pour modifier l'inclinaison du transporteur est conçu pour comprendre :
- un tambour d'enroulement avec un entraînement pouvant être fixé à une coupeuse et/ou fendeuse,
- un support (21) fixé sur le côté inférieur du cadre de transporteur et pourvu au niveau d'une extrémité d'un premier et d'un deuxième réa et au niveau de l'autre extrémité d'un troisième et d'un quatrième réa,
- un cinquième réa pouvant être fixé à une coupeuse et/ou fendeuse,
- un câble (22) pouvant être fixé au niveau de l'une de ses extrémités à une coupeuse et/ou fendeuse et guidé à travers un premier réa, un troisième réa, un cinquième réa, un quatrième réa et un deuxième réa et relié au niveau de l'autre de ses extrémités au tambour d'enroulement.

8. Transporteur selon l'une quelconque des revendications précédentes, **caractérisé en ce que** la courroie transporteuse (14) est pourvue de rails de retenue (15).

9. Coupeuse et/ou fendeuse comprenant le transporteur selon l'une quelconque des revendications précédentes.
